# EUROPEAN PATENT APPLICATION

(11) **EP 3 173 178 A1**
(43) Date of publication of application: **31.05.2017**
(21) Application number: 16178467.3
(22) Date of filing: 07.07.2016
(51) Int. Cl.: B23K 20/10, F16L 47/24, F16L 47/02

(54) **METHOD FOR CONNECTING METAL FITTINGS TO PIPES MADE OF FIBRE-REINFORCED COMPOSITE MATERIAL, AND LINES OBTAINED WITH THIS METHOD**

(30) Priority: 14.07.2015 DE 102015111388
(71) Applicant: Airbus Operations GmbH, 21129 Hamburg (DE)
(72) Inventor: Born, Johannes, 21129 Hamburg (DE); Fabritz, Alexander, 21129 Hamburg (DE); Rowedder, Carsten, 21129 Hamburg (DE)

(57) **Abstract**

System comprising a pipe (2) and at least one fitting (1; 10; 20), wherein the pipe is made essentially of a thermoplastic, fibre-reinforced composite material, and the fitting is made essentially of titanium or a titanium alloy, and the pipe and the fitting are connected in a fluid-tight manner.

## Description

### Field of the invention

The invention relates to pipes with a fitting made of metal, for example of titanium or a titanium alloy, which are connected to one another in a fluid-tight manner. The pipe can be made of thermoplastic, fibre-reinforced composite materials, for example of carbon fibre- or glass fibre-reinforced polymer. The fitting can serve for the continuous connection of different pipe parts, or also for sealing pipe parts. In particular, the invention relates to hydraulic pipes of aircraft or spacecraft.

The invention also relates to a method for producing a system consisting of such pipes and fittings through fluid-tight welding of the different materials to one another.

### Background of the invention

Hydraulic lines in aircraft and spacecraft are often produced from rigid metal lines. Metal lines can be connected to one another by means of crimp connectors. Pipe lines made of metal are often difficult to deform, for example during installation of the hydraulics systems in structures of aircraft or spacecraft. Another possibility are tube lines made of elastomeric materials. Tube lines can be connected to one another by pressed-on metal fittings. Lines made of elastomeric materials such as rubber can deform in operation and oscillate back and forth. It can be desirable to produce hydraulic lines from fibre-reinforced composite materials since this is a durable and lightweight material. Pipe lines made of fibre-reinforced composite materials cannot easily be connected to one another using crimp connectors or pressed-on metal fittings.

US 4059294 discloses parts made of hard polymer which are connected with metallic fittings, wherein the material combination is not CFRP/titanium. The fitting is connected to the polymer part by means of a toothing. US 2014/0014651 A1 discloses that pipes made of thermoplastic can be joined to fittings by induction welding.

EP 275546 A1 (Airbus) discloses connecting titanium with CFRP by ultrasonic welding. WO 2014/205453 A1 discloses connecting metal fittings with thermoplastic pipes, which can also have GFRP layers. WO 2005/060612 A2 discloses ultrasonic welding of polymer pipes with metal fittings, wherein the pipe has an internal metal barrier layer. US 2007/0051451 A1 discloses an ultrasonic welding method for plates of polymer material. DE 4444461 A1 discloses a combined ultrasonic and resistance pressure welding method for planar workpieces.

### Decription of the invention

The present invention deals with providing hydraulic lines made of fibre-reinforced composite materials, and connecting these rapidly, reliably, durably and where possible in automated fashion to metal fittings. Certain fibre-reinforced composite materials make it possible to plastically deform the pipes at elevated temperature. These objects are achieved with Claims 1 and 9. Other embodiments according to the invention can be found in the subclaims.

One embodiment of the invention is a system comprising a pipe and at least one fitting, wherein the pipe is made essentially of a thermoplastic, fibre-reinforced composite material, and the fitting is made essentially of titanium or a titanium alloy, and the pipe and the fitting are connected in a fluid-tight manner. It is preferred if the pipe is plastically deformable at elevated temperature, preferably in the temperature range from 310 to 400°C. It is further preferred if the thermoplastic, fibre-reinforced composite material comprises, as matrix, essentially polymers on the basis of polyetherketones, preferably PEEK and/or PEKK. It is further preferred if the pipe is resistant to hydraulic fluids, preferably resistant to low-density phosphate ester-based hydraulic fluids. It is further preferred if the thermoplastic, fibre-reinforced composite material comprises, as reinforcing fibres, essentially carbon fibres. It is further preferred if the fitting has a recess into which the pipe can be inserted. It is further preferred if a weld seam connects the fitting and the pipe in a fluid-tight manner. It is further preferred if such a system is used in an aircraft or spacecraft. This makes it possible to provide lightweight and burst-proof pipe lines which are resistant to the fluids used in flight, without having to use adhesives. Furthermore, the connection between the fitting and the pipe can be monitored electrically with regard to their durability, by virtue of the electrical conductivity of the joined materials. The welding process itself can be carried out without the use of shield gas.

Another aspect of the invention relates to a method for producing such a system, comprising the steps of: i) positioning the pipe, the fitting and optionally a sleeve with respect one another such that a part region of the fitting or a part region of the sleeve comes to rest against the outside of the pipe, ii) positioning a means for supporting the pipe wall inside the pipe, iii) welding the pipe and the fitting to one another, wherein the welding is performed using an ultrasonic welding apparatus. In this context, it is preferred if the means for supporting the pipe wall is part of the fitting. In this context, it is preferred if the ultrasonic welding apparatus has a rotating sonotrode which is moved around the parts to be welded, or if the ultrasonic welding apparatus has a sonotrode around which the parts to be welded are rotated.

The abovedescribed aspects, and other aspects, features and advantages of the invention can also be taken from the examples of the embodiments which are described below with reference to the appended drawings.

### Brief description of the drawings

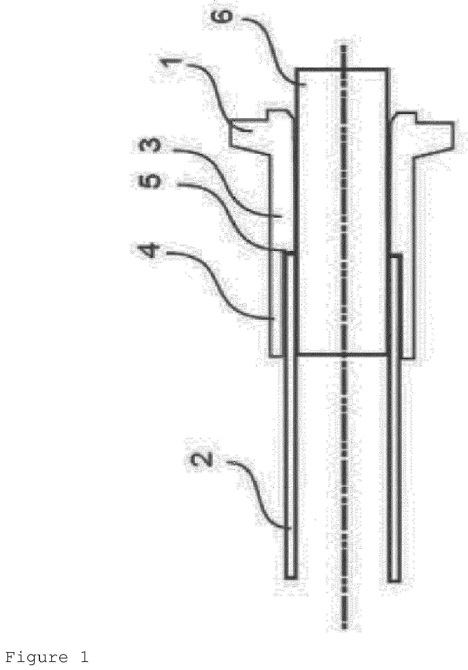

Figures 1 to 4 illustrate various combinations of fittings with pipes made of composite material.

In the figures, identical reference signs are used for identical or at least similar elements, components or aspects. It is noted that the embodiments described in detail below are merely illustrative and non-limiting.

### Detailed description of embodiments

Figure 1 shows, in a longitudinal sectional illustration, a fitting (1) made of metal which can be pushed over a pipe made of CFRP (2). The fitting has a region (4) having an internal diameter that is such that the CFRP pipe (2) can be pushed into the fitting (1). Preferably, this internal diameter corresponds to the external diameter of the pipe. One end (5) of the pipe (2) can abut against a region (3) of the fitting (1) having a smaller internal diameter than the region (3) of the fitting. Preferably, the internal diameter of the region (3) can correspond to the internal diameter of the pipe (2). In order to weld the pipe (2) and the fitting (1), the sonotrode of an ultrasonic welding unit is guided circumferentially along the surface of the region (3) of the fitting (1) such that the material of the pipe (2) in the fitting (1) partially melts and, after solidification, forms a fluid-tight connection between the pipe (2) and the fitting (1). In that context, a retainer (6) can be inserted into the fitting (1) and the pipe (2). It is thus possible to prevent certain deformations of the pipe (2). The retainer (6) can be removed after the welding procedure.

Figure 2 shows, in a longitudinal sectional illustration, a fitting (1) made of metal and a pipe made of CFRP (2), which are arranged in abutment. An essentially tubular sleeve (7) made of metal can be pushed over the pipe (2) and the fitting (1) such that a first region (8) of the sleeve (7) overlaps the pipe (2) circumferentially and a second region (9) of the sleeve (7) overlaps the fitting (1) circumferentially. In order to weld the pipe (2) to the sleeve (7), the sonotrode of an ultrasonic welding unit is guided circumferentially along the surface of the first region (8) of the sleeve (7) such that the material of the pipe (2) inside the sleeve (7) partially melts and, after solidification, forms a fluid-tight connection between the pipe (2) and the sleeve (7). In that context, the welding unit is operated in a first operating state that permits hybrid welding (CFRP/metal). In order to weld the fitting (1) to the sleeve (7), the sonotrode of an ultrasonic welding unit is guided circumferentially along the surface of the second region (9) of the sleeve (7) such that the material of the fitting (1) inside the sleeve (7) partially melts and, after solidification, forms a fluid-tight connection between the fitting (1) and the sleeve (7). In that context, the welding unit is operated in a second operating state that permits the welding of metals. In that context, a retainer as described in Figure 1 can be inserted into the fitting (1) and the pipe (2), and is removed again after welding.

Figure 3 shows, in a longitudinal sectional illustration, a fitting (10) made of metal and a pipe made of CFRP (2), which are arranged in abutment. In that context, the fitting (10) has a first region (13) and a second region (14), the external sides of which are conical and form essentially the same angle with respect to the internal side (12). The pipe (2) can be pushed over the first conical region (13) of the fitting (10) until the pipe (2) abuts against the front edge (15) of the region (14) of the fitting (10). In the process, the region (16) of the pipe (2) widens conically. A conical sleeve (11) made of metal can be pushed over the pipe (2) and the fitting (10) such that a first region (8) of the sleeve (7) overlaps the pipe (2) circumferentially and a second region (9) of the sleeve (7) overlaps the fitting (10) circumferentially. Welding of the pipe (2) and the fitting (10) to the sleeve (11) can be carried out as illustrated in Figure 2, it being unnecessary to use a retainer.

Figure 4 shows, in a longitudinal sectional illustration, a fitting (20) made of metal and a pipe made of CFRP (2). In that context, the fitting (20) has a first region (21) and a second region (22), wherein the second region has a slot into which the pipe (2) can be pushed. The distal region (23) of the fitting (20) can be conical, both on the internal side and on the external side. Welding of the pipe (2) to the fitting (20) can be carried out as per the description relating to Figure 1. A retainer is not required.

While the invention has been illustrated and described in detail in the drawings and the above description, it is intended that such illustrations and descriptions are merely illustrative or exemplary and non-limiting, and therefore the invention is not restricted by the disclosed embodiments. In the claims, the word "having" does not exclude other elements and, and the word "one" or the indefinite article "a" does not exclude a greater number.

The mere event that certain features are specified in different dependent claims does not restrict the subject matter of the invention. In addition, combinations of these features can advantageously be used. The reference signs in the claims should not restrict the scope of the claims.

## Claims

1. System comprising a pipe (2) and at least one fitting (1; 10; 20), wherein the pipe is made essentially of a thermoplastic, fibre-reinforced composite material, and the fitting is made essentially of titanium or a titanium alloy, and the pipe and the fitting are connected in a fluid-tight manner.

2. System according to Claim 1, **characterized in that** the pipe is plastically deformable at elevated temperature.

3. System according to either of Claims 1 and 2, **characterized in that** the thermoplastic, fibre-reinforced composite material comprises, as matrix, essentially polymers on the basis of polyetherketones, preferably PEEK and/or PEKK.

4. System according to one of Claims 1 to 3, **characterized in that** the pipe is resistant to hydraulic fluids, preferably resistant to low-density phosphate ester-based hydraulic fluids.

5. System according to one of Claims 1 to 4, **characterized in that** the thermoplastic, fibre-reinforced composite material comprises, as reinforcing fibres, essentially carbon fibres.

6. System according to one of Claims 1 to 5, **characterized in that** the fitting (1; 10; 20) has a recess (4; 7; 11; 22) into which the pipe can be inserted.

7. System according to one of Claims 1 to 6, **characterized in that** a weld seam connects the fitting and the pipe in a fluid-tight manner.

8. System according to one of Claims 1 to 7 in an aircraft or spacecraft.

9. Method for producing a system according to one of Claims 1 to 8, comprising the steps of:
a) positioning the pipe (2), the fitting (1; 10; 20) and optionally a sleeve (7; 11) with respect one another such that a part region (4; 22) of the fitting or a part region (8; 11) of the sleeve comes to rest against the outside of the pipe,
b) positioning a means (6; 13; 23) for supporting the pipe wall inside the pipe,
c) welding the pipe and the fitting to one another, wherein the welding is performed using an ultrasonic welding apparatus.

10. Method according to Claim 9, **characterized in that** the means (13; 23) for supporting the pipe wall is part of the fitting.

11. Method according to Claim 9 or 10, **characterized in that** the ultrasonic welding apparatus has a rotating sonotrode which is moved around the parts to be welded.

12. Method according to Claim 9 or 10, **characterized in that** the ultrasonic welding apparatus has a sonotrode around which the parts to be welded are rotated.
